# EUROPEAN PATENT SPECIFICATION

(11) **EP 0 196 135 B1**
(45) Date of publication and mention of the grant of the patent: **08.06.1994**
(21) Application number: 86200443.9
(22) Date of filing: 20.03.1986
(51) Int. Cl.: C08K 13/02, C08L 23/02, C08L 55/02, C08L 67/02, C08L 75/04

(54) **Self-extinguishing compositions of thermoplastic polymers**
Selbstauslöschende Zusammensetzungen aus thermoplastischen Polymeren
Compositions auto-extinctrices à base de polymères thermoplastiques

(30) Priority: 29.03.1985 IT 2015585
(43) Date of publication of application: 01.10.1986
(73) Proprietor: ENICHEM SYNTHESIS S.p.A., 90139 Palermo (IT)
(72) Inventor: Cipriani, Gioacchino, I-20097 San Donato Milanese (Milan) (IT); Landoni, Gianluigi, I-20162 Milan (IT)
(74) Representative: Fusina, Gerolamo

(56) References cited:
- EP-A- 0 045 835

## Description

The present invention relates to self-extinguishing thermoplastic polymers comprising, in mixture, a thermoplastic polymer and a mixture of certain additives capable to confer self-extinguishability characteristics to the same thermoplastic polymer.

In the art the need is increasigly felt of having available polymeric compositions provided with high self-extinguishing characteristics, and that for safety reasons. Thus, according to the known art, characteristics of self-extinguishability can be conferred to the thermoplastic polymers by incorporating into the same polymers metal compounds, especially compounds of antimony, bismuth or arsenic, in combination with halogenated organic compounds, such as chlorinated paraffins. Polymeric compositions are thus obtained which, although they are generally satisfactory as for their self-extinguishing characteristics, are disadvantageous as for their corrosiveness during their processing and forming, and due to the emission of darkening smokes and toxic fumes in case of fire during their storage or use. Moreover, the amounts to be added of such additives, in order to obtain high self-extinguishing values (V-0 according to the UNDERWRITERS LABORATORIES, INC.; Bulletin 94, Standard UL-94) are typically of the order of magnitude of about 40% by weight, so as to notably impair the physical-mechanical and light stability characteristics of the polymers they are incorporated in.

In the art, other self-extinguishing, halogen-free additives have been proposed, such as it is disclosed, e.g., in U.S. Patents Nos. 4,009.207 and 4,010,137, capable of conferring V-0 self-extinguishability values, according to the said UL-94 Standard, at lower concentrations, typically of the order of 25% by weight, and hence impairing to a lesser extent the characteristics of the polymers they are incorporated in. Moreover, these additives, of the type known as "char-forming" involve, in case of a fire, a considerable reduction of the darkening smokes and of the toxic and corrosive fumes, comparatively to the halogenated additives.

These additives have shown however not to be completely satisfactory as for at least one of the following aspects: thermal stability under the conditions of moulding of the polymers they are incorporated in, with consequent possibility of the appearance of undesired colourings and of evolvement of gases and fumes; stability over time; concentration required to obtain the desired self-extinguishability effect; and cost.

It has been found now that the disadvantages of the known art can be overcome, or at leat greatly reduced, by means of a certain mixture of self-extinguishing additives for the thermoplastic polymers.

The invention, therefore, provides:
A self-extinguishing thermoplastic composition Comprising a thermoplastic polymer and a mixture of additives imparting self-extinguishing properties to said thermoplastic polymer , said mixture consisting of:
1) An ammonium phosphate or polyphosphate having the general formula: 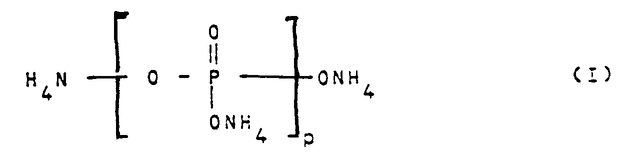 wherein p is from 1 to 1000, and
2) a phosphorus-containing compound having the general formula: 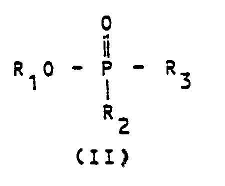 wherein R₁ is selected from the following groups 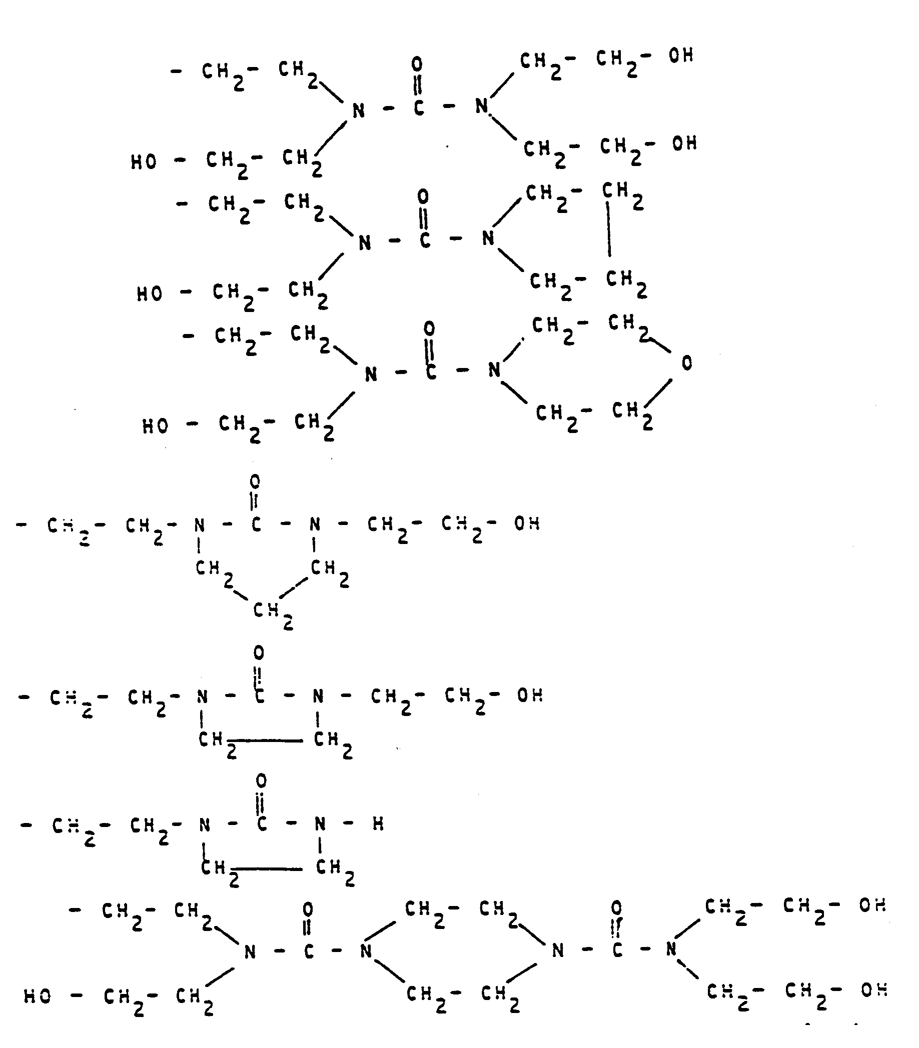 AND
   EITHER
   R₂ is -OH , and
   R₃ is a group having the formula: 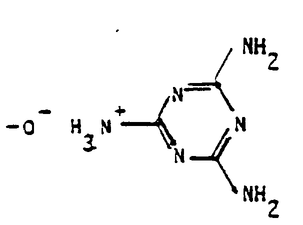
   OR
   R₂ is the group OR₁ , and
   R₃ is -O-NH₄ or a group having the formula: 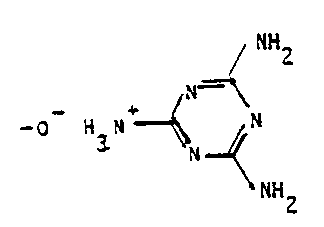
The additives (I) and (II) can be present in overall amounts of from 20 to 35 parts by weight per each 100 parts by weight of thermoplastic polymer, the weight ratio between the additive (I) and the additive (II) can preferably vary from 0.8/1 to 2.0/1.

The thermoplastic polymers to which the self-extinguishability characteristics are conferred are generally those belonging to the following polymer classes: olephinic polymers, acrylonitrile-butadiene-styrene polymers, polyesters such as polyethylene terephthalate and polybutylene terephthalate and polyurethanes. Among these polymers, to the purposes of the present invention, polypropylene and low- and high-density polyethylene are preferred.

The additive (I) of the present invention is preferably an ammonium polyphosphate, as defined by the foregoing formula (I), wherein the value of p varies within the range of from 50 to 1000. The products in question are commercially available, as, e.g., the commercial product EXOLIT^{(R)} 422 by Hoechst, and the commercial product PHOS CHECK^{(R)} P-30 by Monsanto.

The compounds of formula (II) can be prepared starting from compounds R₁OH (wherein R₁ has the hereinabove indicated meaning), obtained in their turn by condensation between aminoalcohols and carbonyl compounds (e.g., urea), by operating in mass at temperatures within the range of from 150 to 200^{o}C.

For instance: 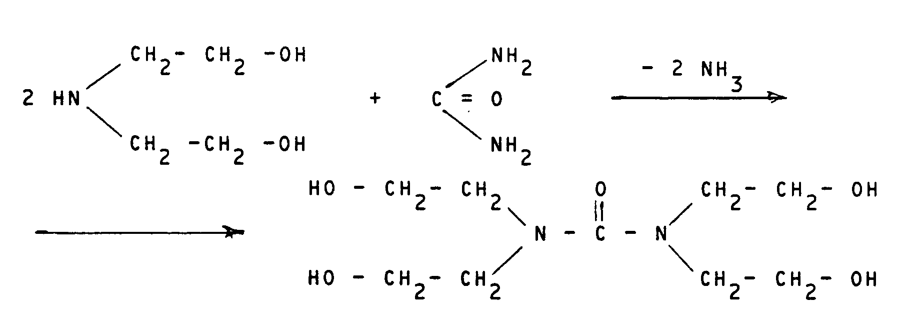
The compounds (II) can be prepared by means of the reaction of the compound R₁OH with POCl₃ or PCl₃ respectively, and subsequent hydrolysis in aqueous medium; the phosphoric or phosphorous ester deriving therefrom can be then treated with melamine to yield the corresponding salt.

For instance: 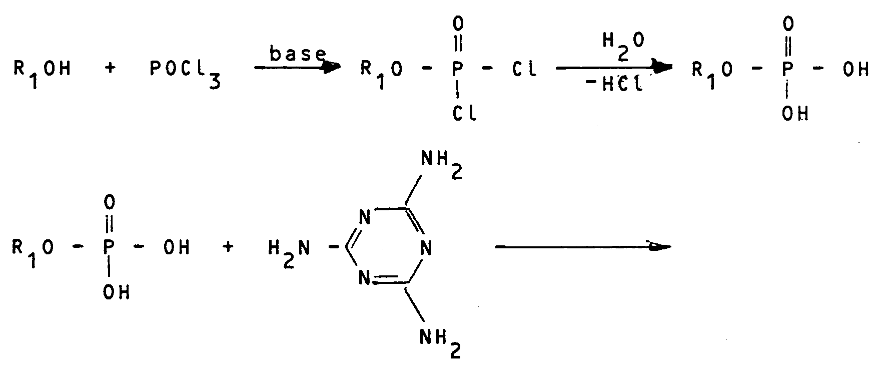 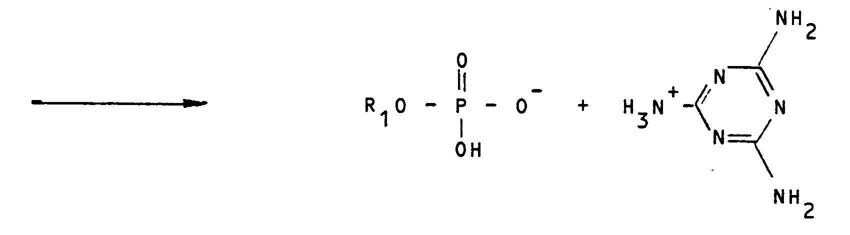
As an alternative, the phosphoric esters of R₁OH can be obtained by thermal condensation between R₁OH and phosphoric acid, or polyphosphoric acid, at temperatures of the order of 80 - 120^{o}C. By subsequent addition of the triazine, the corresponding salt of the amine is obtained, which, by dehydration, can give rise to the amido derivative.

For instance: 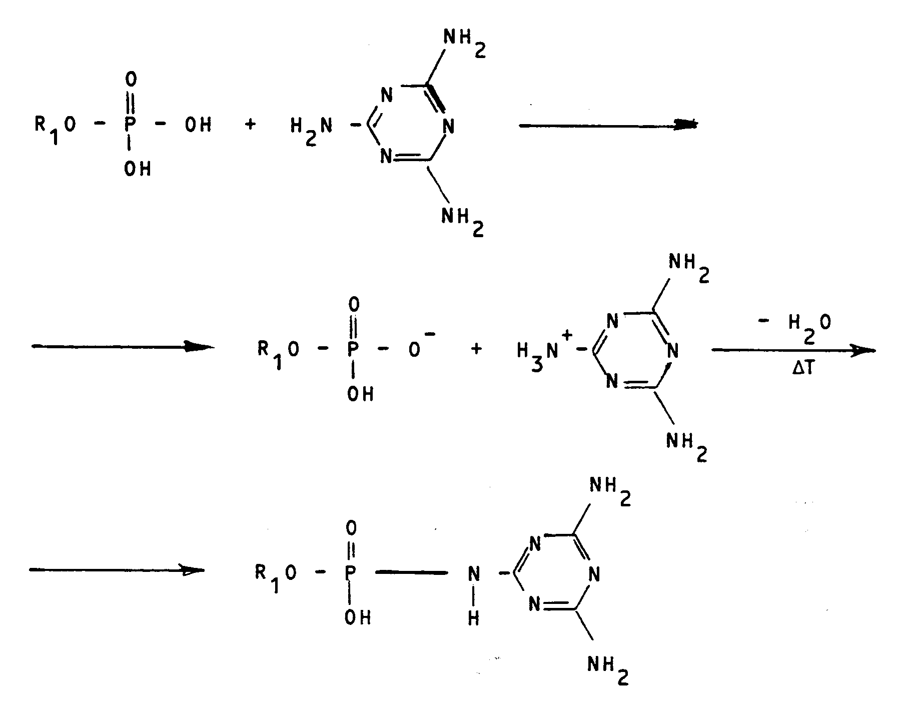
The self-extinguishing composition of thermoplastic polymers of the present invention may be prepared by any means known in the art, and suitable to homogenize the additives with the polymer. According to a usual practice, the additives are submitted to a milling up to reduce them to a powder with particle sizes comprised within the range of from 0,5 to 70 ». The so-obtained powder is blended with the thermoplastic polymer and the blend is extruded, a granulated self-extinguishing composition of thermoplastic polymer being obtained. The mixture of the self-extinguishing additives of the present invention is capable to confer to the thermoplastic polymer into which it is incorporated, high self-extinguishability characteristics (classifiable as V-0 according to the UL-94 Standard) and high values of LOI (Limiting Oxygen Index - ASTM D 2863-77 Standard), when said additives are used in the overall amounts and in the relative proportions which have been previously indicated.

It should be noted that under these conditions, the mixture of the additives does not cause noticeable changes in the typical properties of the thermoplastic polymer it is incorporated in.

It should be finally observed that the self-extinguishability characteristics conferred to the thermoplastic polymers by the mixture of additives are surprisingly good, in particular as compared to the effect exerted by the additives (I) and (II) when used individually, as shown by the ensuing experimental Examples.

In the following experimental Examples, reported to only exemplifying and not limitative purposes, the polypropylene available from the market under the trade name MOPLEN^{(R)} FL F20 by Montedison, having a melt-flow index of about 12 g/10', as measured according to ASTM D 1238 Standard, is used.

To this polypropylene, 0.7% by weight is added of a stabilizer system formed from 66 parts by weight of dilauryl-thiopropanoate and 33 parts by weight of pentaerithritol tetra 3-(3,5-di-tert.butyl-4-hydroxyphenyl)propanoate.

The self-extinguishing additives are homogenized by milling up to a powder with average particle size of about 50 » , and the so-obtained powder is blended and homogenized with the polypropylene powder. The blend is then introduced into an extruder within the temperature range of from 200 to 240^{o}C, and the extrudate is cooled and granulated. The so-obtained granules are both compression-moulded (190-250^{o}C; 40 kg/cm²), and injection-moulded (200-250^{o}C), to respectively obtain two types of specimens:
A specimen: dimensions (127 x 12.7 x 3.2) mm;
B specimen: dimensions (127 x 6.5 x 3.2) mm.

The A specimens are submitted to the test of fire performance according to UL-94 Standard. According to this Standard, the materials receive a V-0, V-1 and V-2 classification, on the basis of the results obtained on five specimens.

The B specimens are submitted to the tests of fire performance according to the ASTM D 2863-77 Standard, correlating the flammability of a polymeric material to the concentration by volume of oxygen present in the atmosphere under which the same specimen is placed. This correlation is expressed as LOI (Limiting Oxygen Index), i.e., as the minimum percentage of oxygen capable of supporting the combustion of the specimen under an oxygen-nitrogen atmosphere impinging against the specimen flowing from down upwards.

### Example 1

200 g (1.92 mol) of N-(2-aminoethyl)-ethanolamine (99%) are mixed with 115.2 g (1.92 mol) of urea in a 1-litre, 4-neck flask, equipped with condenser, thermometer, mechanical stirrer and nitrogen inlet.

By operating under a nitrogen atmosphere, the temperature of the mixture is increased up to 200^{o}C during a 1-hour time, and is maintained at that value for four hours. Ammonia is evolved, which is absorbed in water. At the end of ammonia evolvement, the yellow-coloured solution is cooled to 50^{o}C, and to it an equal volume of tetrahydrofuran is added. The products crystallizes off nearly at once by cooling to room temperature. The whole is then cooled to 5-10^{o}C to increase the crystallization yield, and is filtered at such a temperature under nitrogen. The crystallized product is washed with cool tetrahydrofuran. A white crystalline product is obtained (225 g; yield about 90%), of hygroscopic character. The elemental and spectral (I.R.; N.M.R.) analyses are in accordance with the structure:

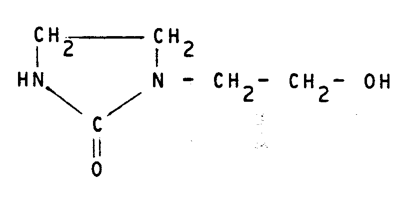

### Example 2

The process is carried out similarly to Example 1, using diethanolamine, to prepare the ureic compound: 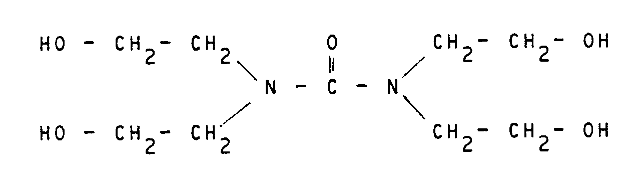
In particular, 105 g (1.0 mol) of diethanolamine are treated with 30 g (0.5 mol) of urea at 180-200^{o}C, under a nitrogen atmosphere. The reaction mixture is distilled under high vacuum, to give 74 g (yield 63%) of a product boiling at 140^{o}C/0.1 mm_{Hg}.

The elemental analysis and the spectral (I.R.; N.M.R.) analyses confirm the above indicated structure.

### Example 3

1-Hydroxyethyl-imidazolidin-2-one (30 g; 0.23 mol), prepared by thermal condensation of N-(2-aminoethyl)ethanolamine with urea, is reacted with urea phosphate (18.2 g; 0.115 mol), operating under a nitrogen atmosphere at 140^{o}C and for 2 hours, inside a glass flask equipped with mechanical stirrer, an inert gas inlet and an outlet for the gas evolved. During this time period the evolvement occurs of carbon dioxide and ammonia. To the reaction mixture, urea (6.90 g; 0.115 mol) is then added, and the temperature is slowly increased, during a 1-hour time, up to 180^{o}C and is kept at this value for the subsequent two hours. At the end of this last time period, no gas is any longer evolved, and the reaction mixture is cooled to room temperature, causing the solidifying thereof, and the so obtained solid product is ground to a powder form.

The reaction product, on the basis of I.R., N.M.R. and elemental analyses is in accordance with the following structure: 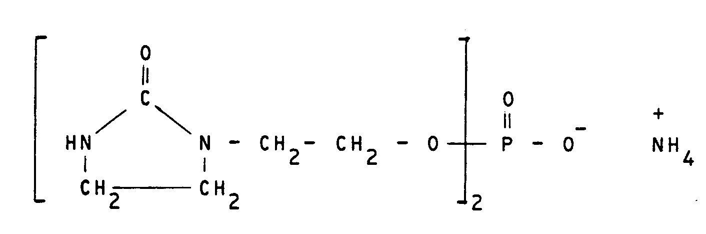
This compound shows, at the thermogravimetric analysis, a T_{2%} value of 215^{o}C, wherein T_{2%} indicates a 2% weight loss at the temperature T shown.

### Example 4

The compound of Example 3 can be alternatively prepared by means of the following procedure.

0.2 mol (13.0 g) of 2-hydroxyethyl-imidazolidin-2-one 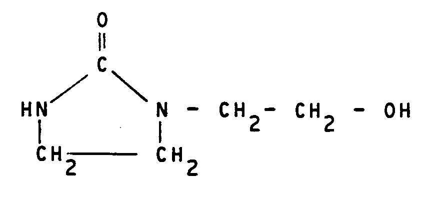
dissolved in 50 ml of methylene chloride are added under an inert atmosphere and during a 1-hour time to 0.1 mol (15.3 g) of POCl₃, in its turn dissolved in 50 ml of methylene chloride, in the presence of 2 mol (20.5 g) of triethylamine, at the temperature of -20^{o}C. After 1 hour from the time of the addition, and always maintaining the temperature at -20^{o}C, the amine hydrochloride is filtered off, methylene chloride is evaporated off, and 33.5 g are obtained of a very thick residue, corresponding to the phosphohydrochloride of structure: 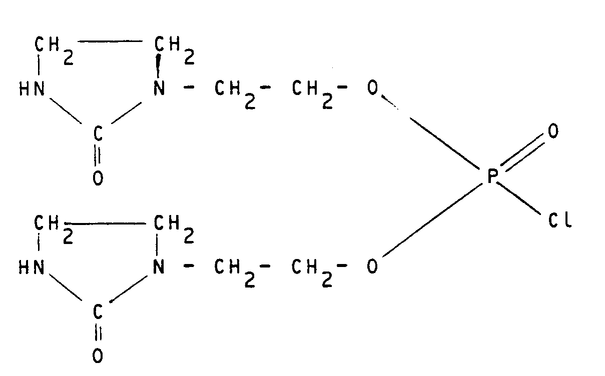
(Cl: 10.5% by weight; N: 16.0 by weight).

This compound is hydrolyzed at 2^{o}C with an aqueous solution of ammonia (about 10% by weight). The solution is evaporated to dryness, operating at a temperature lower than 40^{o}C, and the dry product is separated from ammonium chloride by extraction with methanol. The product obtained, as a white powder (24.4 g; yield 72%) corresponds to the formula: 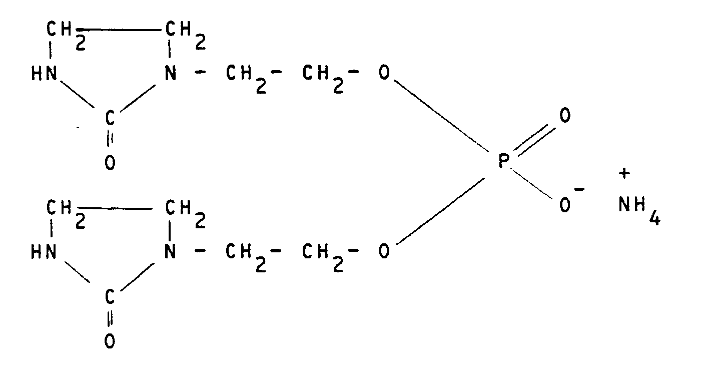
on the basis of spectral (I.R. and N.M.R.) evidences and of the results of the elemental analysis (N: 20% by weight; P: 8.8% by weight).

### Example 5

Polyphosphoric acid (85% by weight of P₂O₅; 11.4 g) is reacted with the compound 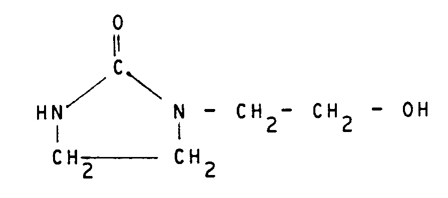
(17.8 g; 0.136 mol), by operating three hours at 120^{o}C.

28.1 g (yield 97.1%) are obtained of a reaction product which, on the basis of the potentiometric analysis (titration with NaOH) displays the behaviour of a dibasic acid, with equivalent weight 106.5, in accordance with the structure: 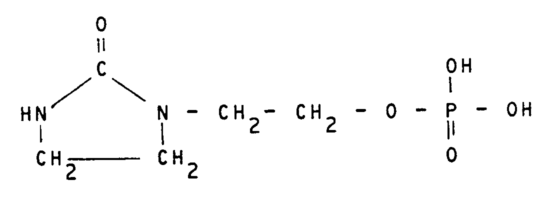
25 g of this compound are treated in aqueous solution, at low temperature (5^{o}C) with 15.0 g of melamine, added as small portions. After 5 hours, a white crystalline powder is filtered off, and is repeatedly washed with water. The product is dried, and 30.3 g are weighed (yield about 75%).

Spectral evidences (I.R.: strong band within the range ν = 1050-1150 cm⁻¹), and the elemental analysis are in accordance with the structure:

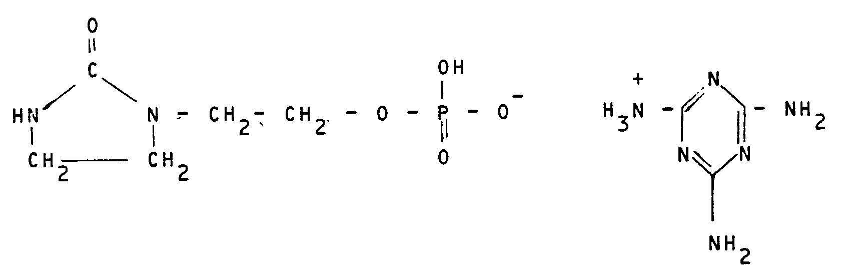

### Example 6

To the compound of Example 3 (73 g; 0.21 mol) melamine (26.6 g; 0.21 mol) is added, and the mixture is thoroughly mixed under an inert atmosphere inside a 500-ml glass reactor, immersed in a silicone oil bath at the temperature of 180^{o}C. The mixture, of resinous appearance, is kept stirred at this temperature for 2 hours, after which the temperature is increased up to 250^{o}C. After further four hours of reaction, the evolvement of gas (ammonia and water vapour) ends.

On cooling, 83 g are recovered of product, the elemental analysis of which is substantially in agreement with the structure: 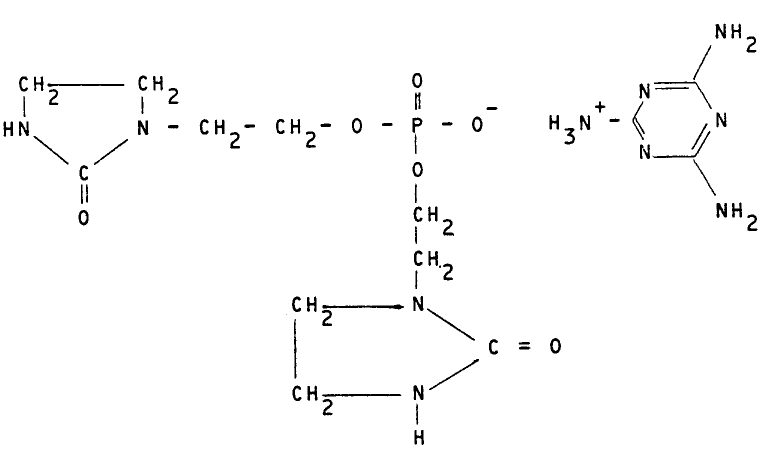
(N: 30.2% by weight; P: 6.5% by weight).

However, for the product in question, together with the above-reported structure, the existence can be likely conjectured of species derived from it either by elimination of intramolecular water and/or by intermolecular condensations. The existence of these species confers a much lower solubility to the product in question.

### Example 7

The additive of Example 6 is obtained by means of the following alternative procedure.

1-Hydroxyethyl-imidazolidin-2-one (100 g; 0.76 mol) is mixed with melamine phosphate (85 g; 0.38 mol) and with urea (45.6 g; 0.76 mol) in a 500-ml glass reactor.

The mixture is heated under stirring and under inert atmosphere at 150^{o}C for 6 hours and at 180^{o}C for 3 hours. The temperature is then increased up to 250^{o}C and the reaction is continued for further 4 hours, after which the evolvement of ammonia and carbon dioxide ends. The recovered reaction product (about 130 g) is substantially analogue to that obtained at Example 6, on the basis of the elemental analysis.

### Example 8

By following the procedure as outlined in the previous examples a mixture is prepared containing polypropylene (76.5% by weight), additive (II) of Example 3 (9% by weight) and commercial ammonium polyphosphate PHOS CHECK^{(R)} P30 by Monsanto, corresponding to the additive (I) with a p value comprised within the range of from 50 to 1000, according to the directions supplied by the manufacturer (13% by weight). The balance of the mixture consists of conventional stabilizers for polypropylene, as outlined above (0.7% by weight), and of an internal lubricant (0.8% by weight).

This mixture is formed into granules and from the granules the A and B specimens are prepared.

The specimens, submitted to the fire performance test, have given the following results:
UL-94: V-0
LOI : 30

### Example 9

The operating procedure is similar to Example 8, using the additive (II) of Example 5.

The following results are obtained from the test for fire performance of the specimens:
UL-94: V-0
LOI : 32

### Example 10

The operating procedure is similar to Example 8, the following blends being prepared:

| Polypropylene (Parts by weight) | Additive (I) (Parts by weight) | Additive (II) (Parts by weight) | LOI |
|---|---|---|---|
| 76.5 | = | 23.5 | 20.2 |
| 76.5 | 7.5 | 16.0 | 32.1 |
| 76.5 | 10.5 | 13.0 | 33.3 |
| 76.5 | 13.0 | 10.5 | 29.4 |
| 76.5 | 16 | 7.5 | 28.0 |
| 76.5 | 23.5 | = | 24.5 |

The polypropylene used contains antioxidizers and an internal lubricant in the proportions as indicated at Example 6. The additive (I) is the commercial ammonium polyphosphate as reported in Example 8.

The additive (II) is the one prepared in the above Example 6. In the Table, the LOI values determined on the specimens prepared from the compositions are reported.

### Example 11

The operating procedure is similar to that of Example 8, using the additive (II) as prepared in Example 5.

The following results are obtained from the tests of fire performance of the specimens:
UL-94: V-0
LOI : 29.6

## Claims (Claims for the following Contracting State(s): BE, CH, DE, FR, GB, LI, LU, NL, SE)

1. A self-extinguishing thermoplastic composition comprising a thermoplastic polymer and a mixture of additives imparting self-extinguishing properties to said thermoplastic polymer, said mixture consisting of:
1) An ammonium phosphate or polyphosphate having the general formula: 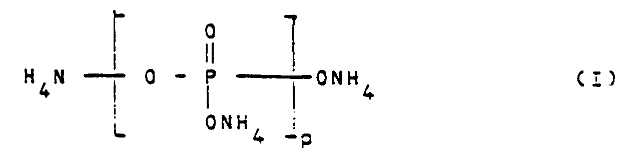 wherein p is from 1 to 1000
2) a phosphorus-containing compound having the general formula: 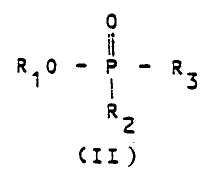 wherein R₁ is selected from the following groups 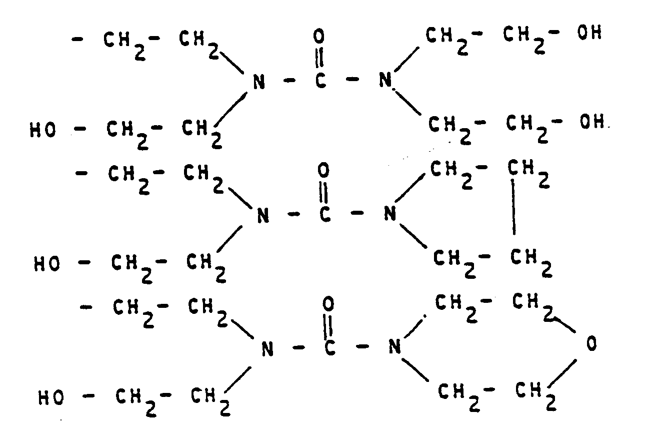 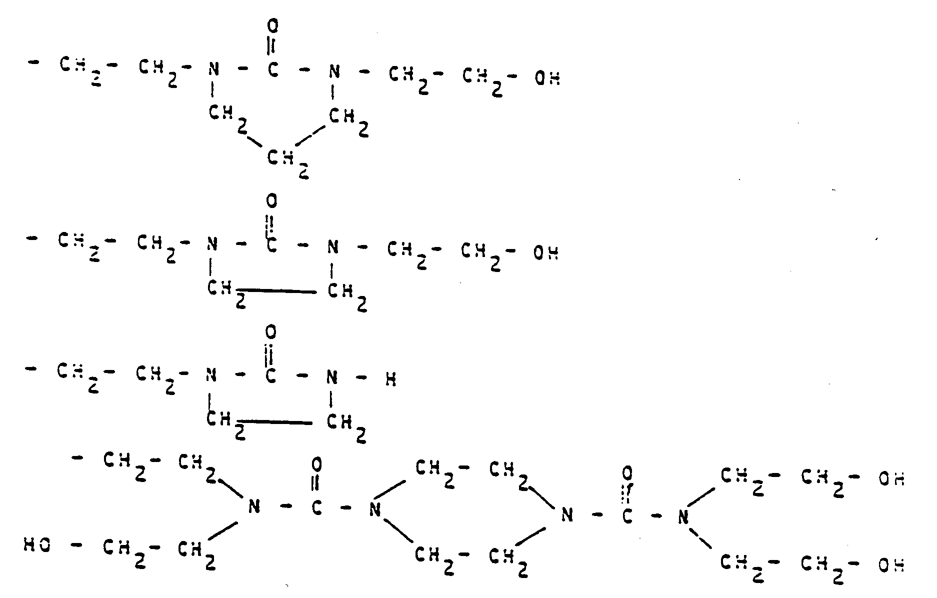 AND
EITHER
R₂ is -OH , and
R₃ is a group having the formula: 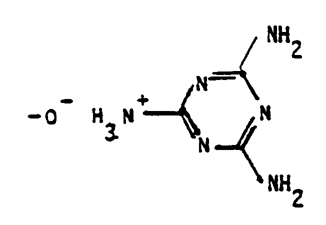 OR
R₂ is the group OR₁ , and
R₃ is -O-NH₄ or a group having the formula:

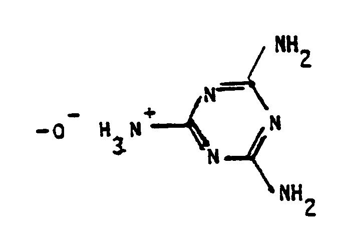

2. A composition according to claim 1, wherein the thermoplastic polymer is selected from olephinic polymers, acrylonitrile-butadiene-styrene polymers, polyethylene terephthalate, polybutylene terephthalate and polyurethanes.

3. A composition according to claim 2, wherein the olephinic polymers are polypropylene or high- or low-density polyethylene.

4. A composition according to claim 1, wherein the weight ratio of the additive 1) to the additive 2) is from 0,8 to 1 to 2,0 to 1.

## Claims (Claims for the following Contracting State(s): AT)

1. A process for preparing a self-extinguishing thermoplastic composition comprising the step of combining a thermoplastic polymer and a mixture of additives imparting self-extinguishing properties to said thermoplastic polymer , said mixture consisting of:
1) An ammonium phosphate or polyphosphate having the general formula: 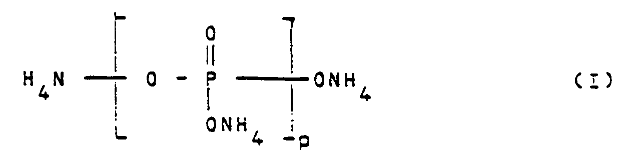 wherein p is from 1 to 1000, and
2) a phosphorus-containing compound having the general formula: 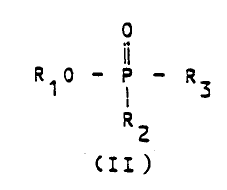 wherein R₁ is selected from the following groups 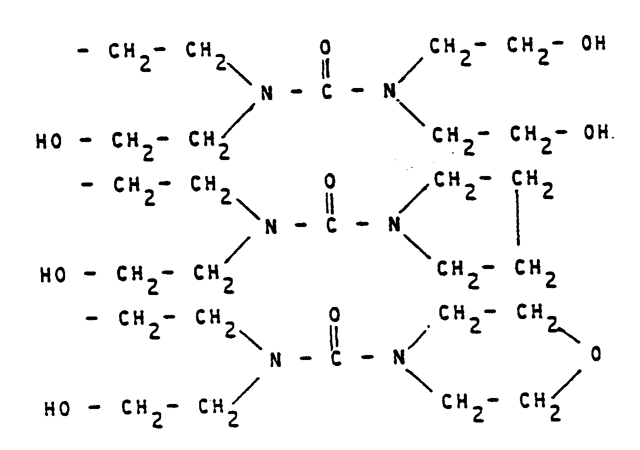 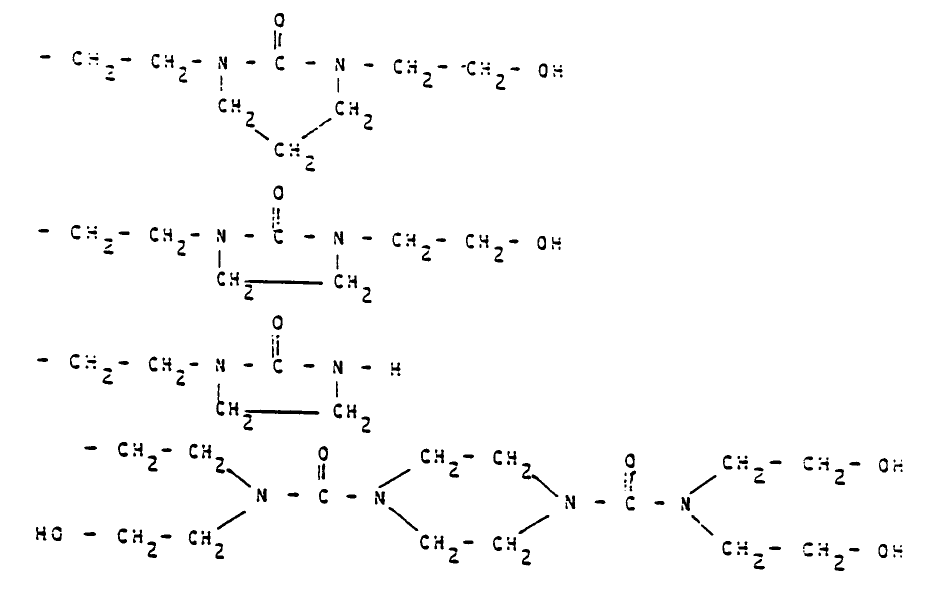 AND
EITHER
R₂ is -OH , and
R₃ is a group having the formula: 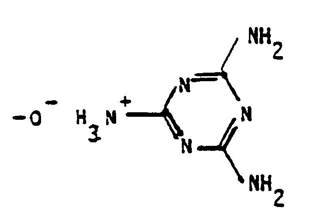 OR
R₂ is the group OR₁ , and
R₃ is -O-NH₄ or a group having the formula:

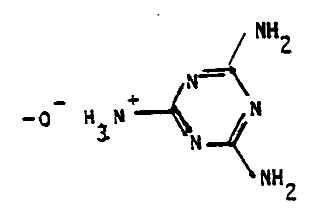

2. A process according to claim 1, characterized in that the thermoplastic polymer is selected from olephinic polymers, acrylonitrile-butadiene-styrene polymers, polyethylene terephthalate, polybutylene terephthalate and polyurethanes.

3. A process according to claim 2, characterized in that the olephinic polymers are polypropylene or high- or low-density polyethylene.

4. A process according to claim 1, characterized in that the weight ratio of the additive 1) to the additive 2) is from 0,8 to 1 to 2,0 to 1.

## Patentansprüche (Patentansprüche für folgende(n) Vertragsstaat(en): BE, CH, DE, FR, GB, LI, LU, NL, SE)

1. Selbstverlöschende thermoplastische Zusammensetzung, umfassend ein thermoplastisches Polymer und ein Gemisch von Additiven, die dem thermoplastischen Polymer selbstverlöschende Eigenschaften verleihen, welches Gemisch aus:
1) einem Ammoniumphosphat oder -polyphosphat mit der allgemeinen Formel: 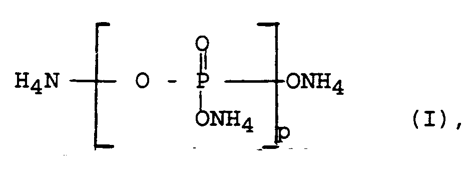 worin p einen Wert von 1 bis 1.000 aufweist;
2) einer phosphorhältigen Verbindung mit der allgemeinen Formel: 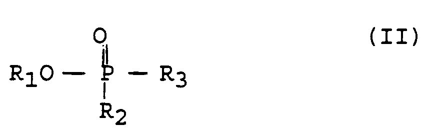 besteht, worin R₁ unter den folgenden Gruppen ausgewählt ist: 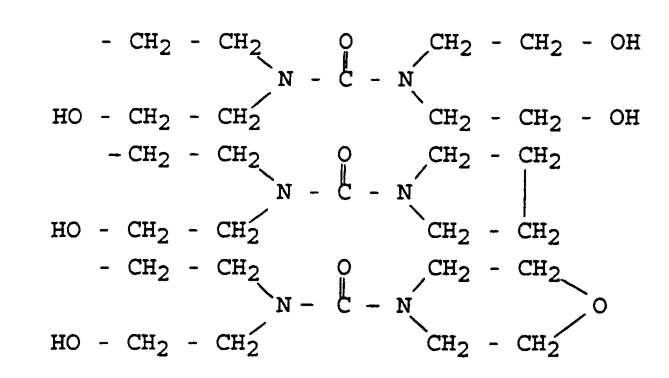 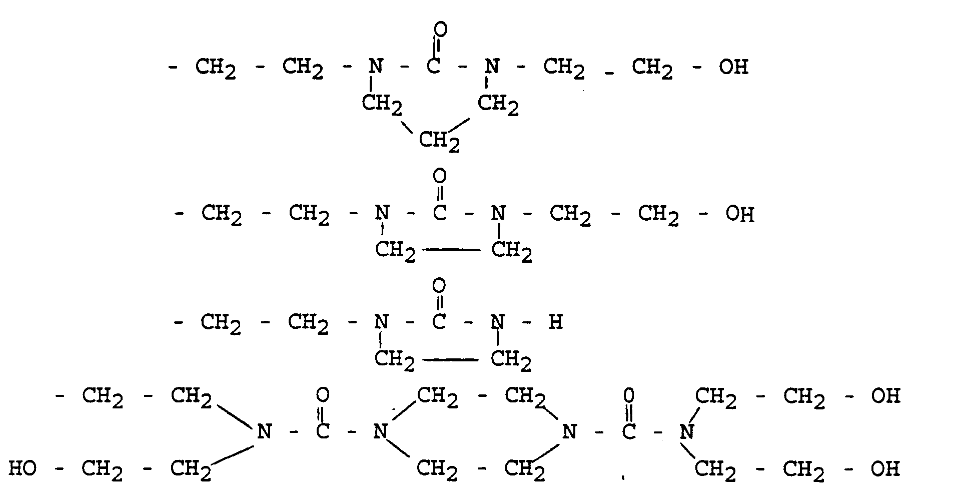 und worin entweder
R₂ für -OH steht und
R₃ eine Gruppe mit der Formel: 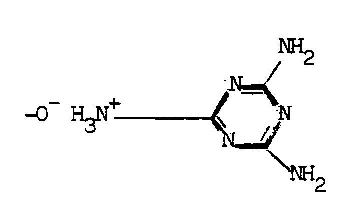 ist oder
R₂ die Gruppe OR₁ bedeutet und
R₃ für -O-NH₄ oder eine Gruppe mit der Formel: 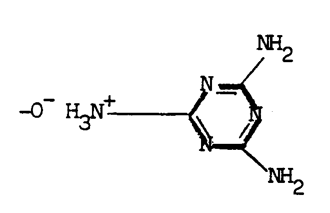
steht.

2. Zusammensetzung nach Anspruch 1, worin das thermoplastische Polymer unter Olefinpolymeren, Acrylnitril-Butadien-Styrol-Polymeren, Polyethylenterephthalat, Polybutylenterephthalat und Polyurethanen ausgewählt ist.

3. Zusammensetzung nach Anspruch 2, worin die Olefinpolymere Polypropylen oder Polyethylen mit hoher oder niedriger Dichte sind.

4. Zusammensetzung nach Anspruch 1, worin das Gewichtsverhältnis des Additivs 1) zum Additiv 2) von 0,8:1 bis 2,0:1 beträgt.

## Patentansprüche (Patentansprüche für folgende(n) Vertragsstaat(en): AT)

1. Verfahren zur Herstellung einer selbstverlöschenden thermoplastischen Zusammensetzung, umfassend das Kombinieren eines thermoplastischen Polymers mit einem Gemisch von Additiven, das dem thermoplastischen Polymer selbstverlöschende Eigenschaften verleiht, welches Gemisch aus:
1) einem Ammoniumphosphat oder -polyphosphat mit der allgemeinen Formel: 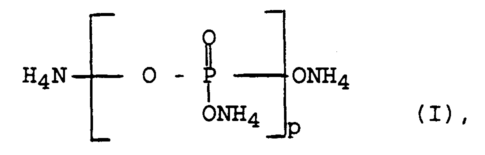 worin p einen Wert von 1 bis 1.000 aufweist;
2) einer phosphorhältigen Verbindung mit der allgemeinen Formel: 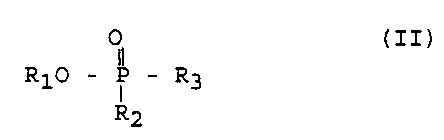 besteht, worin R₁ unter den folgenden Gruppen ausgewählt ist: 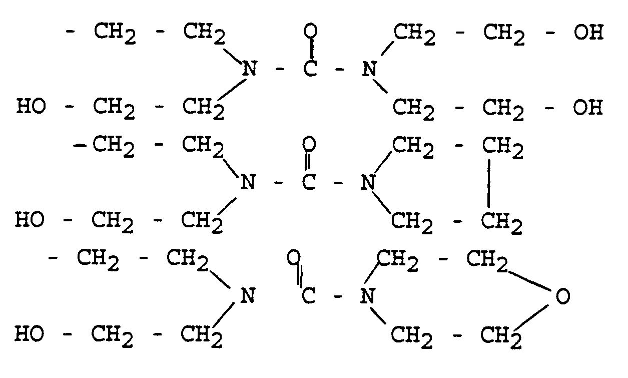 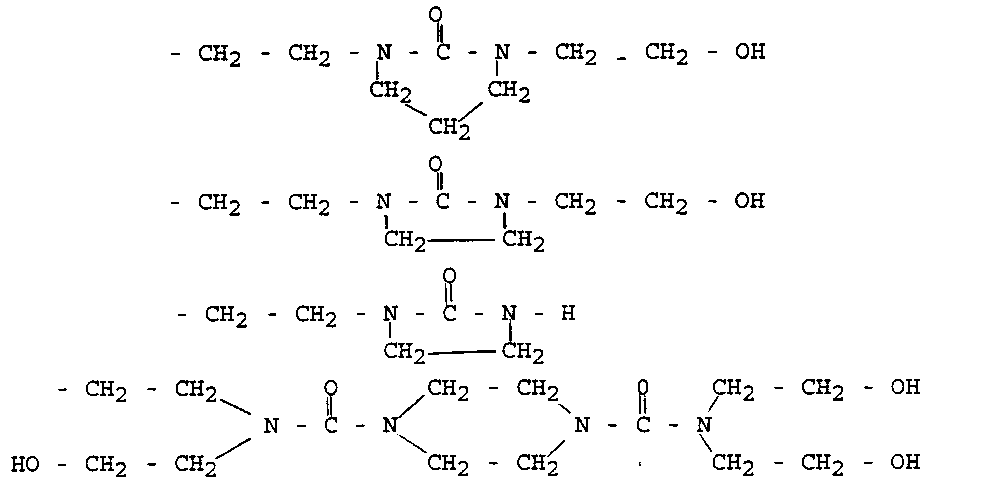 und worin entweder
R₂ für -OH steht und
R₃ eine Gruppe mit der Formel: 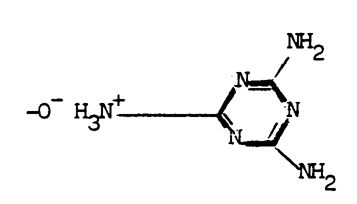 ist oder
R₂ die Gruppe OR₁ bedeutet und
R₃ für -O-NH₄ oder eine Gruppe mit der Formel: 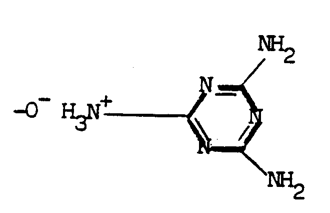
steht.

2. Verfahren nach Anspruch 1, dadurch gekennzeichnet, daß das thermoplastische Polymer unter Olefinpolymeren, Acrylnitril-Butadien-Styrol-Polymeren, Polyethylenterephthalat, Polybutylenterephthalat und Polyurethanen ausgewählt wird.

3. Verfahren nach Anspruch 2, dadurch gekennzeichnet, daß die Olefinpolymere Polypropylen oder Polyethylen mit hoher oder niedriger Dichte sind.

4. Verfahren nach Anspruch 1, dadurch gekennzeichnet, daß das Gewichtsverhältnis des Additivs 1) zum Additiv 2) von 0,8:1 bis 2,0:1 beträgt.

## Revendications (Revendications pour l'(les) Etat(s) contractant(s) suivant(s): BE, CH, DE, FR, GB, LI, LU, NL, SE)

1. Composition thermoplastique auto-extinguible, comprenant un polymère thermoplastique et un mélange d'adjuvants apportant des propriétés d'auto-extinguibilité audit polymère thermoplastique, ledit mélange comportant :
1) un phosphate ou polyphosphate d'ammonium, de formule générale : 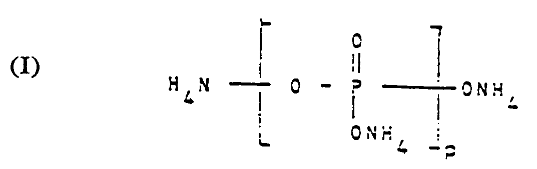 dans laquelle p vaut de 1 à 1000;
et
2) un composé phosphoré de formule générale : 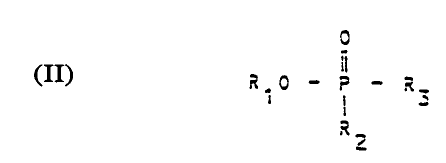 dans laquelle R₁ est choisi parmi les groupes suivants : 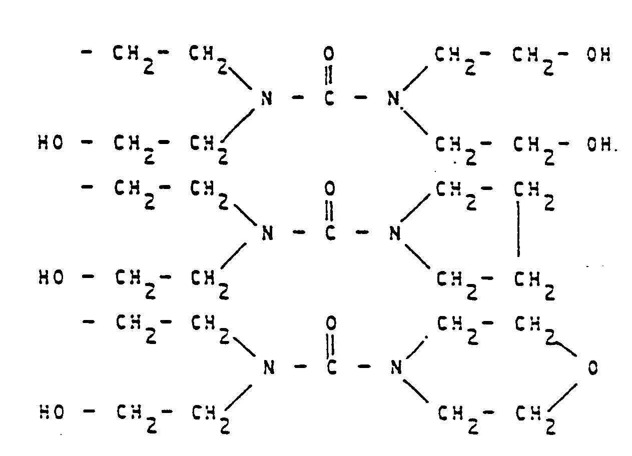 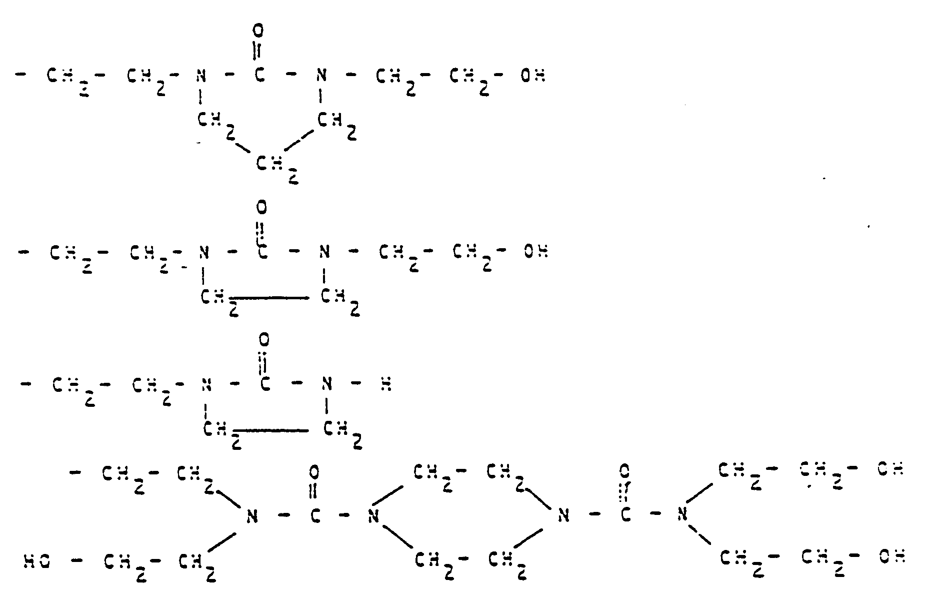 et R₂ représente -OH et R₃ représente un groupe de formule 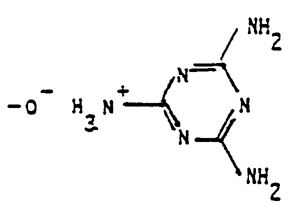 ou bien R₂ représente un groupe -OR₁ et R₃ représente -O-NH₄ ou un groupe de formule :

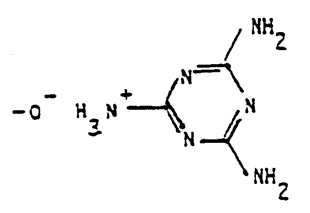

2. Composition conforme à la revendication 1, dans laquelle le polymère thermoplastique est choisi parmi les polymères d'oléfines, les polymères acrylonitrile/butadiène/styrène, le poly(téréphtalate d'éthylène), le poly(téréphtalate de butylène) et les polyuréthannes.

3. Composition conforme à la revendication 2, dans laquelle les polymères d'oléfines sont le polypropylène, le polyéthylène basse densité et le polyéthylène haute densité.

4. Composition conforme à la revendication 1, dans laquelle le rapport pondéral de l'adjuvant (1) à l'adjuvant (2) vaut de 0,8/1 à 2,0/1.

## Revendications (Revendications pour l'(les) Etat(s) contractant(s) suivant(s): AT)

1. Procédé de préparation d'une composition thermoplastique auto-extinguible, comprenant l'étape consistant à combiner un polymère thermoplastique et un mélange d'adjuvants apportant des propriétés d'auto-extinguibilité audit polymère thermoplastique, ledit mélange comportant :
1) un phosphate ou polyphosphate d'ammonium, de formule générale : 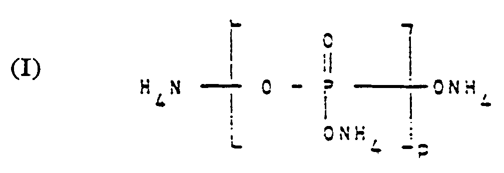 dans laquelle p vaut de 1 à 1000;
et
2) un composé phosphoré de formule générale : 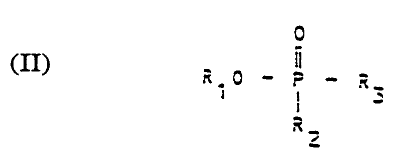 dans laquelle R₁ est choisi parmi les groupes suivants : 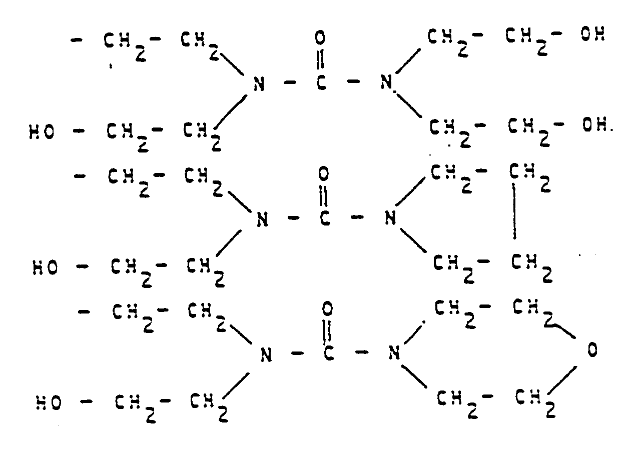 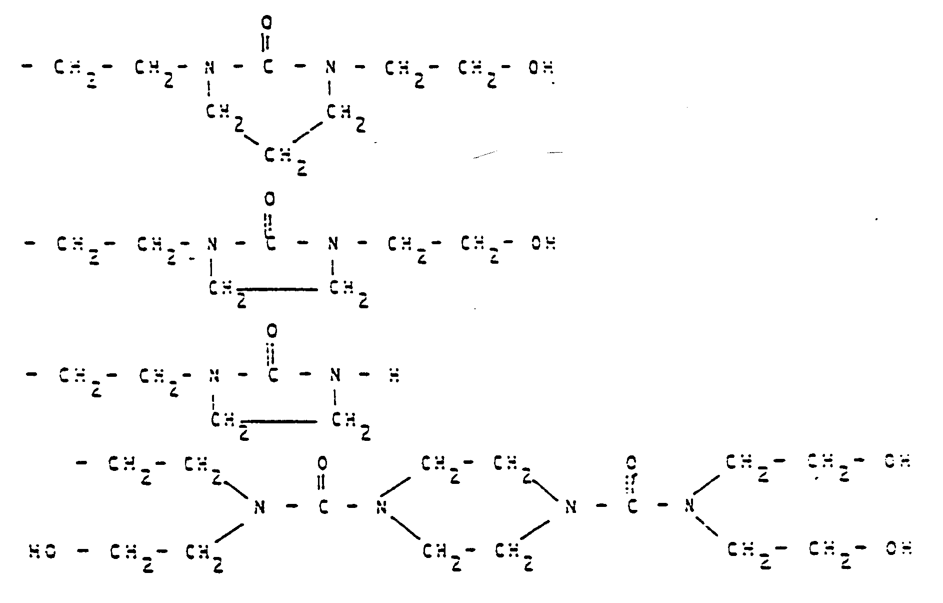 et R₂ représente -OH et R₃ représente un groupe de formule 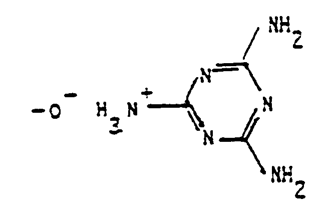 ou bien R₂ représente un groupe -OR₁ et R₃ représente -O-NH₄ ou un groupe de formule:

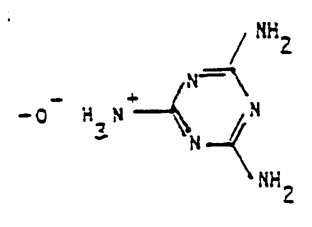

2. Procédé conforme à la revendication 1, caractérisé en ce que le polymère thermoplastique est choisi parmi les polymères d'oléfines, les polymères acrylonitrile/butadiène/styrène, le poly(téréphtalate d'éthylène), le poly(téréphtalate de butylène) et les polyuréthannes.

3. Procédé conforme à la revendication 2, caractérisé en ce que les polymères d'oléfines sont le polypropylène, le polyéthylène basse densité et le polyéthylène haute densité.

4. Procédé conforme à la revendication 1, caractérisé en ce que le rapport pondéral de l'adjuvant (1) à l'adjuvant (2) vaut de 0,8/1 à 2,0/1.
